# EUROPÄISCHE PATENTANMELDUNG

(11) **EP 2 116 736 A2**
(43) Veröffentlichungstag der Anmeldung: **11.11.2009**
(21) Anmeldenummer: 09155821.3
(22) Anmeldetag: 23.03.2009
(51) Int. Cl.: F16D 48/06

(54) **Verfahren zur Steuerung einer automatisierten Reibungskupplung**

(30) Priorität: 09.05.2008 DE 102008001682
(71) Anmelder: ZF Friedrichshafen AG, 88038 Friedrichshafen (DE)
(72) Erfinder: Petzold, Rainer, 88048 Friedrichshafen (DE); Herter, Peter, 88212 Ravensburg (DE); Bitzer, Franz, 88048 Friedrichshafen (DE); Mair, Roland, 88069 Tettnang (DE)

(57) **Zusammenfassung**

Die Erfindung betrifft ein Verfahren zur Steuerung einer automatisierten Reibungskupplung, die als Membranfederkupplung ausgebildet sowie als Anfahr- und Schaltkupplung in einem Antriebsstrang eines Kraftfahrzeugs zwischen einem Antriebsmotor und einem Schaltgetriebe angeordnet ist, wobei während einer Kupplungsbetätigung mindestens ein Betriebsparameter der Reibungskupplung sensorisch erfasst wird, und aus dem Verlauf des Betriebsparameters zumindest ein Adaptionsparameter zur Korrektur eines Steuerungsparameters des zugeordneten Kupplungsstellers abgeleitet wird.

Um ohne großen Aufwand zusätzliche Informationen über den Verlauf der Ausrückkraft F_{KA}(x_{K}) ermitteln und zur Verbesserung der Ansteuerung eines zugeordneten Kupplungsstellers verwenden zu können, ist erfindungsgemäß vorgesehen, dass die Reibungskupplung mit konstanter Ansteuerung bzw. Betätigung des Kupplungsstellers vollständig ausgerückt wird, dass während des Ausrückvorgangs der Ausrückweg (x_{K}) als Funktion der Ausrückzeit (t) erfasst wird, und dass aus dem zeitlichen Verlauf des Ausrückweges (x_{K}(t)) mindestens ein charakteristischer Kennwert ermittelt wird, aus dem zumindest ein Adaptionsparameter zur Korrektur eines Steuerungsparameters des Kupplungsstellers bestimmt wird.

## Beschreibung

Die Erfindung betrifft ein Verfahren zur Steuerung einer automatisierten Reibungskupplung, die als Membranfederkupplung ausgebildet ist und als Anfahr- und Schaltkupplung in einem Antriebsstrang eines Kraftfahrzeugs zwischen einem Antriebsmotor und einem Schaltgetriebe angeordnet ist, wobei während einer Kupplungsbetätigung mindestens ein Betriebsparameter der Reibungskupplung sensorisch erfasst wird, und aus dem Verlauf des Betriebsparameters zumindest ein Adaptionsparameter zur Korrektur eines Steuerungsparameters des zugeordneten Kupplungsstellers abgeleitet wird.

Membranfederkupplungen sind seit längerem bekannt und haben sich aufgrund ihrer robusten und Platz sparenden Bauweise besonders bei Kraftfahrzeugen als bevorzugte Bauart passiv schließbarer Trockenkupplungen durchgesetzt. Bei einer Membranfederkupplung ist die Anpressfeder als eine Membranfeder ausgebildet, mittels der eine Druckplatte axial gegen eine drehfest mit der Triebwelle des Antriebsmotors verbundene und zumeist als Schwungscheibe ausgebildete Gegendruckplatte gedrückt wird, wodurch mindestens eine mit Reibbelägen versehene und drehfest mit der Eingangswelle des Schaltgetriebes verbundene Mitnehmerscheibe eingespannt wird, und somit reibschlüssig ein Drehmoment von dem Antriebsmotor auf das Schaltgetriebe übertragen werden kann. Die Membranfeder ist üblicherweise derart ausgelegt, dass sie über die gesamte Lebensdauer eine sichere Momentenübertragung gewährleistet.

Zum Ein- und Ausrücken einer Membranfederkupplung weist die Membranfeder innere Federzungen auf, an denen ein als Zentralausrücker ausgebildeter Kupplungssteller oder ein über einen extern angeordneten Kupplungssteller schwenkbarer Ausrückhebel über ein Ausrücklager eine axiale Ausrückkraft einleiten kann. Hinsichtlich der Bauweise der Membranfederkupplung, insbesondere der Abstützung der Membranfeder, kann zwischen einer gezogenen Kupplung, bei der die Ausrückkraft in Richtung des Schaltgetriebes wirkt, und einer gedrückten Kupplung, bei der die Ausrückkraft in Richtung des Antriebsmotors wirkt, unterschieden werden.

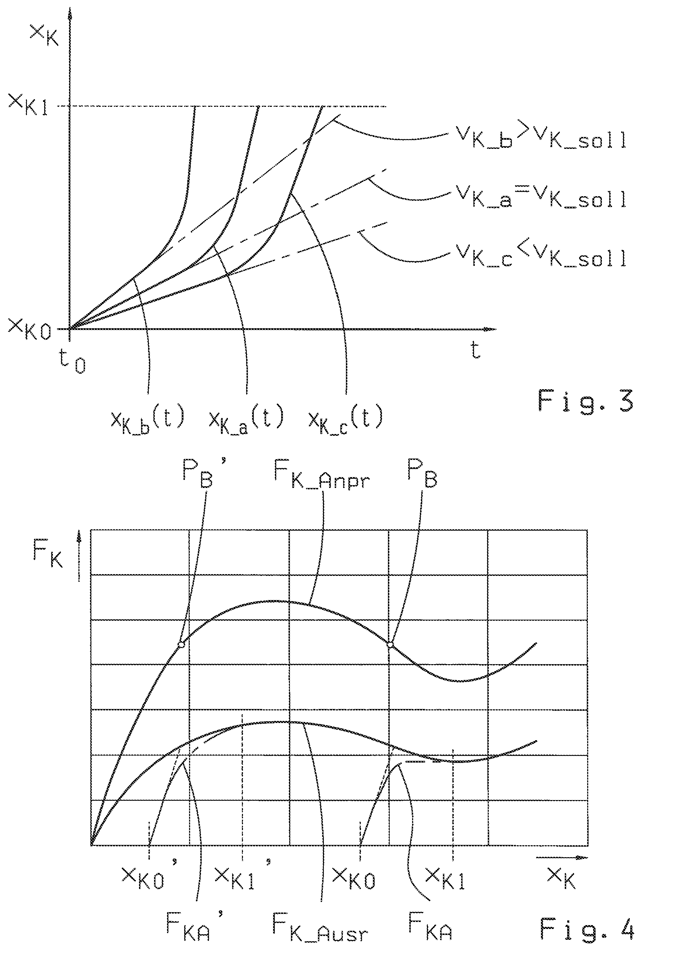

In dem Diagramm der Fig. 4 ist mit der oberen Kurve die Anpresskraft F_{K_Anpr} und mit der unteren Kurve die Ausrückkraft F_{K_Ausr} einer Membranfeder jeweils für den geschlossenen Zustand der Kupplung über dem Ausrückweg x_{K} dargestellt. In der oberen Kurve ist mit P_{B} der Betriebspunkt der Kupplung für neuwertige Reibbeläge der zugeordneten Mitnehmerscheibe und mit P_{B}' der Betriebspunkt für abgenutzte Reibbeläge bezeichnet. Demzufolge verschiebt sich bei einer Membranfederkupplung mit automatischem Nullpunktausgleich der Arbeitsbereich, d.h. der Bereich zwischen dem Zu-Wegpunkt x_{K0} für den vollständig eingerückten Zustand und dem Auf-Wegpunkt x_{K1} für den vollständig ausgerückten Zustand, im Verlauf der Abnutzung der Reibbeläge von rechts nach links; in der Darstellung von Fig. 4 also von dem Bereich x_{K0} bis x_{K1} zu dem Bereich x_{K0}' bis x_{K1}'. Die entsprechenden Verläufe der Ausrückkraft über den Ausrückweg bei einem Ausrückvorgang sind in Fig. 4 in vereinfachter Form jeweils als strichpunktierter Verlauf F_{KA} und F_{KA}' unterhalb der Kurve für die Ausrückkraft F_{K_Ausr} dargestellt.

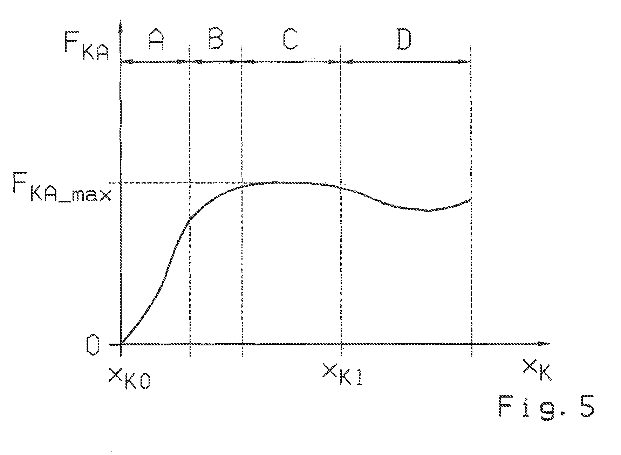

Eine detailliertere Darstellung eines typischen Verlaufes der Ausrückkraft F_{KA} über dem Ausrückweg x_{K} bei einem Ausrückvorgang einer Membranfederkupplung ist in Fig. 5 qualitativ wiedergegeben. Demnach gliedert sich der Verlauf der Ausrückkraft F_{KA} in einen anfänglichen Anstiegsbereich A mit einem weitgehend linearen Anstieg der Ausrückkraft F_{KA} über dem Ausrückweg x_{K}, einen daran anschließenden Übergangsbereich B mit einem degressiven Übergang der Ausrückkraft F_{KA} auf einen Wert, der in einem anschließenden Sättigungsbereich C weitgehend konstant bleibt und dort im Bereich der im normalen Arbeitsbetrieb erreichbaren maximalen Ausrückkraft F_{KA_max} liegt. In einem daran anschließenden Bereich D sinkt die Ausrückkraft F_{KA} mit zunehmendem Ausrückweg x_{K} zunächst ab, um anschließend erneut anzusteigen.

Angesichts des nichtlinearen Verlaufs der Ausrückkraft F_{KA}(x_{K}) und von fertigungsbedingten Schwankungen sowie von verschleißbedingten Änderungen dieses Verlaufes ist die Notwendigkeit einer diesbezüglichen Adaption von Steuerungsparametern des zugeordneten Kupplungsstellers gegeben, um eine Reproduzierbarkeit automatisiert gesteuerter Aus- und Einkuppelvorgänge zu ermöglichen. Dies wird unter anderem auch dadurch verdeutlicht, dass in der DE 10 2005 039 922 A1 eine Stelleinrichtung einer Membranfederkupplung vorgeschlagen wird, bei welcher die Regelungskennlinie eines zugeordneten Reglers derart ausgelegt ist, dass der nichtlineare Verlauf der Ausrückkraft F_{KA}(x_{K}) durch eine entsprechende Ansteuerung des Kupplungsstellers kompensiert wird. Ein mögliches Verfahren zur Adaption der Reglerkennlinie, also zur Anpassung der Reglerkennlinie an den jeweils aktuellen Ausrückkraftverlauf F_{KA}(x_{K}) der Membranfederkupplung ist der DE 10 2005 039 922 A1 jedoch nicht zu entnehmen.

Bekannte Adaptionsverfahren automatisierter Reibungskupplungen sind bislang auf die Ermittlung von Eckpunkten der jeweiligen Drehmomentkennlinie beschränkt, die das übertragbare Drehmoment der Reibungskupplung als Funktion des Stellweges wiedergibt. So sind z.B. unterschiedliche Verfahren zur Ermittlung bzw. Adaption des Zu-Punktes oder Geschlossen-Punktes der Drehmomentkennlinie bekannt, in denen derjenige Wert des Stellweges ermittelt wird, bei dem die Reibungskupplung vollständig geschlossen ist und ein konstruktiv vorgegebenes Maximalmoment übertragen kann.

In weiteren bekannten Verfahren wird der auch als Anlege- oder Berührpunkt bezeichnete Aufpunkt einer Reibungskupplung ermittelt bzw. adaptiert, bei dem die betreffenden Reibelemente gerade miteinander in Kontakt kommen oder sich trennen und die Reibungskupplung somit gerade ein infinitesimal kleines Drehmoment übertragen kann. Derartige Verfahren basieren auf sensorisch erfassbare Reaktionen von Betriebsparametern zugeordneter oder benachbarter Bauteile, wie des Stellweges des Kupplungsstellers, der Drehzahl der Getriebeeingangswelle oder des Antriebsmotors, oder der Einspritzmenge des Antriebsmotors.

In der DE 101 63 438 A1 ist dagegen ein Verfahren beschrieben, bei dem während einer automatisierten Kupplungsbetätigung ein Betriebsparameter einer Membranfederkupplung sensorisch erfasst wird, und aus dem Verlauf dieses Betriebsparameters ein Adaptionsparameter zur Korrektur eines Steuerungsparameters des zugeordneten Kupplungsstellers abgeleitet wird. Demnach ist vorgesehen, dass während eines Aus- oder Einrückvorgangs der Reibungskupplung die Ausrückkraft F_{KA} als Funktion des Ausrückweges x_{K} sensorisch erfasst wird, und dass aus dem Verlauf der Ausrückkraft F_{KA}(x_{K}), konkret anhand einer Unstetigkeit im Gradientenverlauf der Ausrückkraft F_{KA}(x_{K}), der Anlegepunkt der Membranfederkupplung bestimmt wird. Nachteilig an diesem Verfahren ist jedoch, dass neben einem Wegsensor ein zusätzlicher Kraftsensor erforderlich ist, und dass die betreffende Unstetigkeit im Gradientenverlauf der Ausrückkraft F_{KA}(x_{K}) in signifikanter Form nur bei einer keine Belagfederung aufweisenden Mitnehmerscheibe auftritt. Im übrigen wird der Verlauf der Ausrückkraft F_{KA}(x_{K}) in diesem Verfahren nicht für sich selbst ausgewertet, sondern nur zur Ermittlung des Anlegepunktes verwendet, der aber nur einen Eckpunkt der Drehmomentkennlinie darstellt.

Vor diesem Hintergrund liegt der vorliegenden Erfindung die Aufgabe zugrunde, ein Verfahren anzugeben, mit dem ohne großen Aufwand zusätzliche Informationen über den Verlauf der Ausrückkraft F_{KA}(x_{K}) ermittelt und zur Verbesserung der Ansteuerung eines zugeordneten Kupplungsstellers verwendet werden können.

Gemäß den Merkmalen des Hauptanspruchs geht die Erfindung daher aus von einem Verfahren zur Steuerung einer automatisierten Reibungskupplung, die als Membranfederkupplung ausgebildet sowie als Anfahr- und Schaltkupplung in einem Antriebsstrang eines Kraftfahrzeugs zwischen einem Antriebsmotor und einem Schaltgetriebe angeordnet ist, wobei während einer Kupplungsbetätigung mindestens ein Betriebsparameter der Reibungskupplung sensorisch erfasst wird, und aus dem Verlauf des Betriebsparameters zumindest ein Adaptionsparameter zur Korrektur eines Steuerungsparameters des zugeordneten Kupplungsstellers abgeleitet wird.

Zur Lösung der gestellten Aufgabe ist dabei vorgesehen, dass die Reibungskupplung mit konstanter Ansteuerung bzw. Betätigung des Kupplungsstellers vollständig ausgerückt wird, dass während des Ausrückvorgangs der Ausrückweg als Funktion der Ausrückzeit erfasst wird, und dass aus dem zeitlichen Verlauf des Ausrückweges mindestens ein charakteristischer Kennwert ermittelt wird, aus dem zumindest ein Adaptionsparameter zur Korrektur eines Steuerungsparameters des Kupplungsstellers bestimmt wird.

Vorteilhafte und zweckmäßige Ausgestaltungen und Weiterbildungen des erfindungsgemäßen Verfahrens sind Gegenstand der Ansprüche 2 bis 10.

Der Erfindung liegt die Erkenntnis zu Grunde, dass sich bei einem Ausrückvorgang einer Membranfederkupplung mit konstanter Ansteuerung bzw. Betätigung des Kupplungsstellers, also bei konstantem Stellkraftanstieg, ein typischer zeitlicher Verlauf des Ausrückweges x_{K}(t) ergibt, der unmittelbar mit der Ausrückkraftkennlinie, d.h. dem Wegverlauf der Ausrückkraft F_{KA}(x_{K}), korreliert. Aufgrund des konstanten Stellkraftgradienten des Kupplungsstellers ergibt sich aufgrund des linearen Anstiegs der federseitigen Ausrückkraft F_{KA}(x_{K}) (siehe Bereich A in Fig. 5) im zeitlichen Verlauf des Ausrückweges x_{K}(t) zunächst ein relativ geringer linearer Anstieg des Ausrückweges x_{K}(t). Die degressive Reduzierung des Anstiegs der federseitigen Ausrückkraft F_{KA}(x_{K}) im Übergangsbereich (siehe Bereich B in Fig. 5) hat dann im zeitlichen Verlauf des Ausrückweges x_{K}(t) einen progressiven Anstieg des Ausrückweges x_{K}(t), also einen Anstieg der Ausrückgeschwindigkeit v_{K} = *d* x_{K} / *d* t zur Folge. Mit Erreichen des Sättigungsbereiches im Wegverlauf der Ausrückkraft F_{KA}(x_{K}) mit einer weitgehend konstanten Ausrückkraft F_{KA}(x_{K}) (siehe Bereich C in Fig. 5) geht der zeitliche Verlauf des Ausrückweges x_{K}(t) aufgrund des weiterhin vorhandenen konstanten Stellkraftanstiegs in einen weitgehend linearen steileren Anstieg des Ausrückweges x_{K}(t) über. Der zeitliche Verlauf des Ausrückweges x_{K}(t) stellt somit zumindest qualitativ eine inverse Abbildung des Wegverlaufes der Ausrückkraft F_{KA}(x_{K}) dar.

Dieser Zusammenhang wird in dem vorliegenden Verfahren dazu genutzt, um aus dem während eines konstant gesteuerten Ausrückvorgangs erfassten zeitlichen Verlaufs des Ausrückweges x_{K}(t) mindestens einen charakteristischen Kennwert zu ermitteln, aus dem dann zumindest ein Adaptionsparameter zur Korrektur eines Steuerungsparameters des Kupplungsstellers bestimmt wird. Dieser Adaptionsparameter ist somit implizit auch abhängig von dem Wegverlauf der Ausrückkraft F_{KA}(x_{K}), der von dem aktuellen Zustand der Membranfederkupplung, insbesondere von einer fertigungsbedingten Serienstreuung und dem Verschleißzustand der Reibbeläge bestimmt wird.

Die konstante Ansteuerung bzw. Betätigung des Kupplungsstellers wird bei dessen Ausbildung als druckmittelbetätigter Stellzylinder durch einen konstanten Drosselquerschnitt eines zugeordneten Proportionalventils oder durch eine konstante Frequenz eines zugeordneten frequenzmodulierten Taktventils, und bei dessen elektromechanischer Ausbildung durch einen konstanten Strom- oder Spannungsgradienten des zugeordneten Elektromotors erzeugt. Das erfindungsgemäße Verfahren setzt nur das Vorhandensein eines Stellwegsensors und eines Zeitgebers voraus, die aber bei einer automatisierten Kupplungssteuerung ohnehin vorhanden sind. Ein zusätzlicher Sensor ist für die Anwendung des Verfahrens demzufolge nicht erforderlich. Das Verfahren kann somit ohne großen Aufwand in jede Steuerungseinrichtung einer automatisierten Membranfederkupplung integriert werden.

In einer ersten Ausgestaltung des erfindungsgemäßen Verfahrens ist vorgesehen, dass aus dem Ausrückwegverlauf x_{K}(t) ein für den nichtlinearen Übergang von dem linearen Anstiegsbereich am Anfang des Ausrückweges x_{K}(t) in den weitgehend linearen Anstiegsbereich am Ende des Ausrückweges x_{K}(t) charakteristischer Ausrückwegpunkt (x_{S}, x_{T}) als Kennwert ermittelt wird, dass aus dem Ausrückwegpunkt (x_{S}, x_{T}) ein Endpunkt x_{LE_neu} des linearen Anstiegsbereiches am Anfang des Ausrückweges x_{K}(t) oder eine Endpunktdifferenz Δx_{LE} = x_{LE_alt} - x_{LE_neu} des Endpunktes x_{LE_neu} zu einem bislang gültigen Endpunkt x_{LE_alt} abgeleitet wird, und dass der bislang gültige Endpunkt x_{LE_alt} mit dem neuen Endpunkt x_{LE_neu} oder der Endpunktdifferenz Δx_{LE} korrigiert wird.

Die Korrektur des Endpunktes x_{LE} kann in an sich bekannter Weise derart erfolgen, dass der bislang gültige Endpunkt x_{LE_alt} durch den neuen Endpunkt x_{LE_neu} ersetzt oder in Richtung des neuen Endpunktes x_{LE_neu} verändert wird. Die Kenntnis des Endpunktes x_{LE} des linearen Anstiegsbereiches am Anfang des Ausrückweges x_{K}(t) kann bei einem vollständigen oder teilweisen Ausrücken der Membranfederkupplung dazu genutzt werden, den Kupplungssteller bis zum Erreichen des Endpunktes x_{LE} mit konstanter Ansteuerung zeitabhängig zu steuern, und ein weiteres Ausrücken ab dem Endpunktes x_{LE} wegabhängig geregelt zu steuern. Hierdurch ergibt sich jeweils eine Vereinfachung und Beschleunigung der Steuerung des Ausrückvorgangs.

Der charakteristische Ausrückwegpunkt x_{S} kann am Ende bzw. nach dem Ausrückvorgang als Schnittpunkt einer Tangente an den linearen Anstiegsbereich am Anfang des Ausrückweges x_{K}(t) und einer Tangente an den weitgehend linearen Anstiegsbereich am Ende des Ausrückweges x_{K}(t) ermittelt werden.

Es ist jedoch auch möglich, den charakteristischen Ausrückwegpunkt x_{T} schon während des Ausrückvorgangs als denjenigen Wert des Ausrückweges x_{K}(t) zu bestimmen, bei dem die Ausrückgeschwindigkeit v_{K} = *d* x_{K} / *d* t einen vorgegebenen Geschwindigkeitsgrenzwert v_{K_Gr} erreicht oder überschritten hat (v_{K} ≥ v_{K_Gr}).

Die Ermittlung des Endpunktes x_{LE} des linearen Anstiegsbereiches oder der Endpunktdifferenz Δx_{LE} = x_{LE_alt} - x_{LE_neu} aus dem jeweiligen Ausrückwegpunkt x_{S} oder x_{T} erfolgt zweckmäßig mittels eines kupplungsspezifischen Datensatzes, der einen entsprechenden Korrekturwert Δx_{Korr} enthält. Der Datensatz kann beim Kupplungs- oder Fahrzeughersteller empirisch ermittelt werden und in einem Datenspeicher des Kupplungssteuergerätes abgespeichert sein.

Um den Einfluss geschwindigkeitsabhängiger Kräfte auf die Ermittlung des Endpunktes x_{LE} weitgehend auszuschalten, ist es vorteilhaft, wenn das Ausrücken der Reibungskupplung mit einer konstanten Ansteuerung bzw. Betätigung des Kupplungsstellers erfolgt, die in dem linearen Anstiegsbereich am Anfang des Ausrückweges x_{K}(t) einer unterhalb einer im Normalbetrieb verwendeten Soll-Ausrückgeschwindigkeit v_{K_soll} liegenden Minimalausrückgeschwindigkeit v_{K_min} entspricht (v_{K} ≈ v_{K_min} bzw. v_{K} < v_{K_soll}).

Für eine weitere Auswertung des Ausrückwegverlaufes x_{K}(t) kann es jedoch auch sinnvoll sein, dass das Ausrücken der Reibungskupplung mit einer konstanten Ansteuerung bzw. Betätigung des Kupplungsstellers erfolgt, die in dem linearen Anstiegsbereich am Anfang des Ausrückweges x_{K}(t) der im Normalbetrieb verwendeten Soll-Ausrückgeschwindigkeit v_{K_soll} entspricht (v_{K} ≈ v_{K_soll}).

Hierdurch wird es insbesondere ermöglicht, dass in einer zweiten Ausgestaltung des erfindungsgemäßen Verfahrens aus dem zeitlichen Verlauf des Ausrückweges x_{K}(t) die Ausrückgeschwindigkeit v_{K_ist} = Δx_{K} / Δt des linearen Anstiegsbereiches am Anfang des Ausrückweges x_{K}(t) ermittelt wird, dass damit die Geschwindigkeitsdifferenz Δv_{K} zu der Soll-Ausrückgeschwindigkeit v_{K_soll} gebildet wird (Δv_{K} = v_{K_soll} - v_{K_ist}), und dass der betreffende Steuerungsparameter des Kupplungsstellers zur Erzielung der Soll-Ausrückgeschwindigkeit v_{K_soll} proportional zu der Geschwindigkeitsdifferenz Δv_{K} korrigiert wird.

Zur Kompensation fertigungsbedingter Schwankungen im Ausrückkraftverlauf F_{KA}(x_{K}) einer Serie von Membranfederkupplungen wird die erfindungsgemäße Korrektur eines Steuerungsparameters des Kupplungsstellers erstmals nach Abschluss der Endmontage des betreffenden Kraftfahrzeugs beim Fahrzeughersteller durchgeführt. Beim anschließenden Einsatz des betreffenden Kraftfahrzeugs wird die erfindungsgemäße Korrektur eines Steuerungsparameters des Kupplungsstellers bevorzugt bei jedem Neustart des Kraftfahrzeugs durchgeführt.

Zur Erhöhung der Genauigkeit der Kupplungssteuerung kann es zudem sinnvoll sein, die erfindungsgemäße Korrektur eines Steuerungsparameters des Kupplungsstellers auch während des Fahrbetriebs des Kraftfahrzeugs in regelmäßigen Zeitintervallen jeweils während einer Fahrpause in Verbindung mit einer fahrbetriebsunabhängigen Kupplungsbetätigung und/oder während der Fahrt in Verbindung mit einer anfahr- oder schaltungsbedingten Kupplungsbetätigung durchzuführen.

Zur Verdeutlichung der Erfindung ist der Beschreibung eine Zeichnung mit Ausführungsbeispielen beigefügt. In dieser zeigt
Fig. 1 ein Diagramm zu einer ersten Methode zur Ermittlung eines Kennwertes einer Membranfederkupplung aus dem zeitlichen Verlauf des Ausrückweges,
Fig. 2 ein Diagramm zu einer zweiten Methode zur Ermittlung des weitgehend selben Kennwertes einer Membranfederkupplung aus dem zeitlichen Verlauf des Ausrückweges,
Fig. 3 ein Diagramm zu einer dritten Methode zur Ermittlung eines weiteren Kennwertes einer Membranfederkupplung aus dem zeitlichen Verlauf des Ausrückweges,
Fig. 4 eine allgemeine Darstellung des Anpresskraftverlaufs und der Ausrückkraft einer Membranfederkupplung über dem Ausrückweg, und
Fig. 5 eine allgemeine Darstellung des Verlaufs der Ausrückkraft über den Ausrückweg einer Membranfederkupplung bei einem Ausrückvorgang.

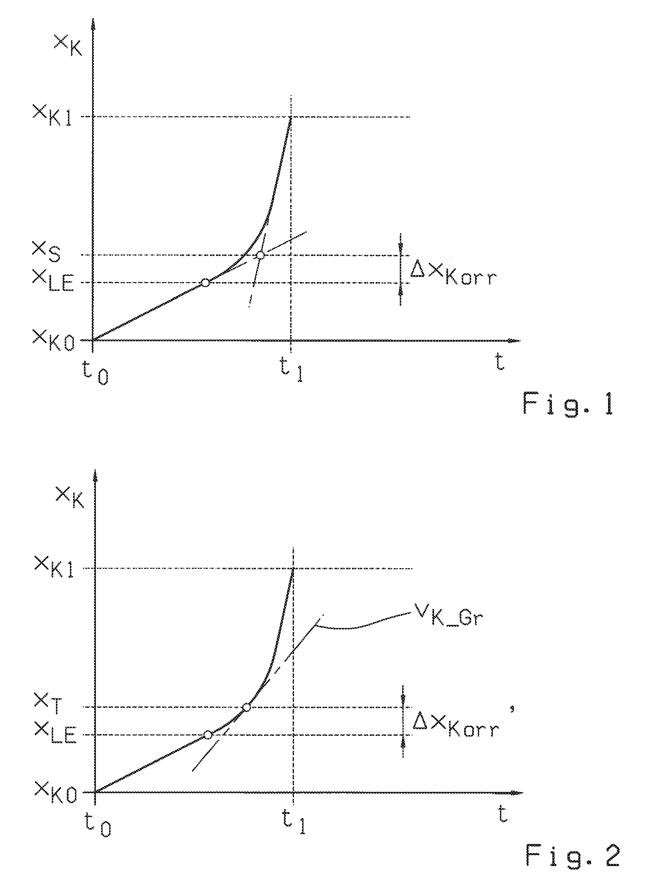

In dem Diagramm von Fig. 1 ist mit der durchgezogenen Linie der zeitliche Verlauf des Ausrückweges x_{K}(t) einer Membranfederkupplung bei deren Betätigung dargestellt, der sich während eines mit konstanter Ansteuerung bzw. Betätigung des Kupplungsstellers, d.h. bei einem konstanten Ausrückkraftanstieg, ergibt. Demzufolge setzt sich der zeitliche Verlauf des Ausrückweges x_{K}(t) vom Anfang des Ausrückvorgangs im Zeitpunkt t₀ bis zum Ende des Ausrückvorgangs im Zeitpunkt t₁ aus einem niedrigen linearen Anstieg des Ausrückweges x_{K}(t) am Anfang des Ausrückvorgangs, einem daran anschließenden progressiven Anstieg des Ausrückweges x_{K}(t), also einem deutlichen Anstieg der Ausrückgeschwindigkeit v_{K} = *d* x_{K} / *d* t, und einem weitgehend linearen sowie steileren Anstieg des Ausrückweges x_{K}(t) gegen Ende des Ausrückvorgangs zusammen.

Der mit geringer Steigung erfolgende lineare Anstieg des Ausrückweges x_{K}(t) am Anfang des Ausrückvorgangs korrespondiert mit dem linearen Anstieg der Ausrückkraft F_{KA} im Wegverlauf der Ausrückkraft F_{KA}(x_{K}), der in dem Diagramm von Fig. 5 als Bereich A bezeichnet ist. Der in Fig. 1 mit x_{LE} bezeichnete Endpunkt des linearen Anstiegs des Ausrückweges x_{K}(t) am Anfang des Ausrückvorgangs ist somit ein wesentlicher Betriebspunkt, der zur Ansteuerung des zugeordneten Kupplungsstellers verwendet werden kann. Da dieser Wegpunkt aufgrund von natürlichen Schwankungen des Stellwegsignals eines zugeordneten Wegsensors nicht unmittelbar bestimmt werden kann, muss dies indirekt erfolgen.

Hierzu ist gemäß der Abbildung in Fig. 1 vorgesehen, dass ersatzweise ein für den Endpunkt x_{LE} des linearen Bereiches charakteristischer Ausrückwegpunkt x_{S} als Schnittpunkt einer Tangente an den linearen Anstiegsbereich am Anfang des Ausrückweges x_{K}(t) und einer Tangente an den weitgehend linearen Anstiegsbereich am Ende des Ausrückweges x_{K}(t) ermittelt wird. Die betreffenden Tangenten sind in Fig. 1 jeweils mit einer Strich-Punkt-Linie dargestellt. Da der so ermittelte Ausrückwegpunkt x_{S} oberhalb des tatsächlichen Endpunktes x_{LE} liegt, wird der Endpunkt x_{LE} durch eine Subtraktion mit einem Korrekturwert Δx_{Korr} ermittelt, gemäß der Gleichung x_{LE} = x_{S} - Δx_{Korr}.

Der kupplungsspezifische Korrekturwert Δx_{Korr} kann aus dem ermittelten Wegpunkt x_{S} zum Beispiel mittels eines vorab beim Kupplungs- oder Fahrzeughersteller empirisch ermittelten und in einem Datenspeicher des Kupplungssteuergerätes abgespeicherten Datensatzes ermittelt werden. Der auf diese Art und Weise ermittelte Endpunkt x_{LE} des linearen Bereiches kann als neuer gültiger Endpunkt oder zur Korrektur eines bislang gültigen Endpunktes des unteren linearen Anstiegs der Kurve x_{K}(t) des Ausrückweges über die Zeit verwendet werden.

Mit der genauen Kenntnis dieses Endpunktes x_{LE} des linearen Anstiegsbereiches am Anfang des Ausrückweges x_{K}(t) kann der Kupplungssteller bei einem vollständigen oder teilweisen Ausrücken der Membranfederkupplung bis zum Erreichen des Endpunktes x_{LE} mit konstanter Ansteuerung bzw. Betätigung zeitabhängig gesteuert und bei einem weiteren Ausrücken ab dem Endpunkt x_{LE} wegabhängig geregelt werden. Hierdurch ergibt sich im Vergleich zu einer vollständig wegabhängigen Regelung eines Ausrückvorgangs eine Vereinfachung und Beschleunigung des Steuerungsablaufs.

In einer dazu alternativen, in dem Diagramm von Fig. 2 veranschaulichten Verfahrensvariante, ist vorgesehen, dass anstelle des tatsächlichen Endpunktes x_{LE} des linearen Bereiches des Zeitverlaufes x_{K}(t) zunächst ein für diesen charakteristischer Ausrückwegpunkt x_{T} als derjenige Wert des Ausrückweges x_{K}(t) bestimmt wird, bei dem die Ausrückgeschwindigkeit v_{K} = *d* x_{K} / *d* t einen vorgegebenen Geschwindigkeitsgrenzwert v_{K_Gr} erreicht oder überschritten hat (v_{K} ≥ v_{K_Gr}). Der betreffende Geschwindigkeitsgrenzwert ist in Fig. 3 als strichpunktierte Tangente an den Zeitverlauf des Ausrückweges x_{K}(t) dargestellt. Da auch der auf diese Art und Weise ermittelte Ausrückwegpunkt x_{T} oberhalb des tatsächlichen Endpunktes x_{LE} liegt, wird der Endpunkt x_{LE} analog zur ersten Verfahrensvariante durch die Subtraktion eines Korrekturwertes Δx_{Korr}' gemäß der Gleichung x_{LE} = x_{T} - Δx_{Korr}' ermittelt

Eine weitere Verfahrensvariante, die in Fig. 3 veranschaulicht ist, setzt voraus, dass das Ausrücken der Reibungskupplung mit einer konstanten Ansteuerung bzw. Betätigung des Kupplungsstellers erfolgt, die in dem linearen Anstiegsbereich am Anfang des Ausrückweges x_{K}(t) einer im Normalbetrieb verwendeten Soll-Ausrückgeschwindigkeit v_{K_soll} entspricht (v_{K} ≈ v_{K_soll}). Aus dem zeitlichen Verlauf des Ausrückweges x_{K}(t) wird dann die Ausrückgeschwindigkeit v_{K_ist} = Δx_{K} / Δt des linearen Anstiegsbereiches am Anfang des Ausrückweges x_{K}(t) ermittelt und damit die Geschwindigkeitsdifferenz Δv_{K} zu der Soll-Ausrückgeschwindigkeit v_{K_soll} gebildet (Δv_{K} = v_{K_soll} - v_{K_ist}). Anschließend wird der betreffende Steuerungsparameter des Kupplungsstellers zur Erzielung der Soll-Ausrückgeschwindigkeit v_{K_soll} proportional der Geschwindigkeitsdifferenz Δv_{K} korrigiert.

Durch eine derartige Korrektur des Steuerungsparameters können somit fertigungs- und verschleißbedingte Abweichungen des Verlaufes der Ausrückkraft F_{KA}(x_{K}) über den Stellweg, die sich in einer Abweichung der Ausrückgeschwindigkeit v_{K_ist} von der Soll-Ausrückgeschwindigkeit v_{K_soll} im Zeitverlauf des Ausrückweges x_{K}(t) äußern, kompensiert werden. Der derart ermittelte Steuerungsparameter kann zudem im Regelbetrieb als Basisverstärkungsfaktor des Kupplungsreglers verwendet werden.

Zur weiteren Erläuterung der Verfahrensvariante sind in Fig. 3 drei Ausrückvorgänge mit unterschiedlichen Ausrückgeschwindigkeiten v_{K} = Δx_{K} / Δt im linearen Anstiegsbereich am Anfang des Ausrückweges x_{K}(t) dargestellt. Bei dem mittleren, mit x_{K_a}(t) bezeichneten Ausrückvorgang entspricht die durch eine strichpunktierte Tangente verdeutlichte Ausrückgeschwindigkeit v_{K_a} der Sollgeschwindigkeit v_{K_soll} gemäß der Gleichung v_{K_a} = v_{K_soll}, so dass eine Korrektur des betreffenden Steuerungsparameters des Kupplungsstellers zur Erzielung der Sollgeschwindigkeit v_{K_soll} unterbleibt.

Dagegen ist die durch eine strichpunktierte Tangente verdeutlichte Ausrückgeschwindigkeit v_{K_b} des oberen, mit x_{K_b}(t) bezeichneten Ausrückvorgangs größer als die Sollgeschwindigkeit v_{K_soll}, also v_{K_b} > v_{K_soll}, so dass zur Erzielung der Sollgeschwindigkeit v_{K_soll} eine Verringerung des betreffenden Steuerungsparameters des Kupplungsstellers erforderlich ist.

Im Gegensatz dazu ist die durch eine strichpunktierte Tangente verdeutlichte Ausrückgeschwindigkeit v_{K_c} des unteren, mit x_{K_c}(t) bezeichneten Ausrückvorgangs kleiner als die Soll-Ausrückgeschwindigkeit v_{K_soll} und damit v_{K_c} < v_{K_soll}, so dass zur Erzielung der Sollgeschwindigkeit v_{K_soll} eine Erhöhung des betreffenden Steuerungsparameters des Kupplungsstellers erforderlich ist. Die Korrektur des Steuerungsparameters erfolgt daher zweckmäßig proportional zu einer Geschwindigkeitsdifferenz Δv_{K}, die aus der Soll-Ausrückgeschwindigkeit v_{K_soll} und der Ist-Ausrückgeschwindigkeit v_{K_ist} gebildet wird (ΔV_{K} = V_{K_soll} - V_{K_ist}).

Zur Erläuterung von Fig. 4 und Fig. 5 wird auf den entsprechenden Beschreibungstext in der Einleitung verwiesen.

### Bezugszeichen

- A: Anstiegsbereich, Bereich von x_{K}
- B: Übergangsbereich, Bereich von x_{K}
- C: Sättigungsbereich, Bereich von x_{K}
- D: weiterer Bereich, Bereich von x_{K}
- F_{K}: Kupplungskraft
- F_{K_Anpr}: Anpresskraft
- F_{K_Ausr}: Ausrückkraft
- F_{KA}: Ausrückkraft
- F_{KA_max}: Maximale Ausrückkraft
- P_{B}: Betriebspunkt
- P_{B}': Betriebspunkt
- v_{K}: Ausrückgeschwindigkeit
- v_{K_a}: Ausrückgeschwindigkeit
- v_{K_b}: Ausrückgeschwindigkeit
- v_{K_c}: Ausrückgeschwindigkeit
- v_{K_ist}: Ist-Ausrückgeschwindigkeit
- v_{K_min}: Minimalausrückgeschwindigkeit
- v_{K_soll}: Soll-Ausrückgeschwindigkeit
- x_{K}: Stellweg, Ausrückweg
- x_{K_a}: Ausrückweg
- x_{K_b}: Ausrückweg
- x_{K_c}: Ausrückweg
- x_{K0}: Ausrückwegpunkt, Zu-Wegpunkt
- x_{K1}: Ausrückwegpunkt, Auf-Wegpunkt
- x_{LE}: Endpunkt
- x_{LE_alt}: Bislang gültiger Wert des Endpunktes
- x_{LE_neu}: Aktuell ermittelter Wert des Endpunktes
- x_{S}: Ausrückwegpunkt
- x_{T}: Ausrückwegpunkt
- t: Zeit
- t₀: Zeitpunkt
- t₁: Zeitpunkt
- Δt: Zeitdifferenz
- Δv_{K}: Geschwindigkeitsdifferenz
- Δx_{K}: Ausrückkraftdifferenz
- Δx_{Korr}: Korrekturwert
- Δx_{Korr}': Korrekturwert
- Δx_{LE}: Endpunktdifferenz

## Patentansprüche

1. Verfahren zur Steuerung einer automatisierten Reibungskupplung, die als Membranfederkupplung ausgebildet und als Anfahr- und Schaltkupplung in einem Antriebsstrang eines Kraftfahrzeugs zwischen einem Antriebsmotor und einem Schaltgetriebe angeordnet ist, wobei während einer Kupplungsbetätigung mindestens ein Betriebsparameter der Reibungskupplung sensorisch erfasst wird, und aus dem Verlauf des Betriebsparameters zumindest ein Adaptionsparameter zur Korrektur eines Steuerungsparameters des zugeordneten Kupplungsstellers abgeleitet wird, **dadurch gekennzeichnet, dass** die Reibungskupplung mit konstanter Ansteuerung bzw. Betätigung des Kupplungsstellers vollständig ausgerückt wird, dass während des Ausrückvorgangs der Ausrückweg (x_{K}) als Funktion der Ausrückzeit (t) erfasst wird, und dass aus dem zeitlichen Verlauf des Ausrückweges (x_{K}(t)) mindestens ein charakteristischer Kennwert ermittelt wird, aus dem zumindest ein Adaptionsparameter zur Korrektur eines Steuerungsparameters des Kupplungsstellers bestimmt wird.

2. Verfahren nach Anspruch 1, **dadurch gekennzeichnet, dass** aus dem Ausrückwegverlauf (x_{K}(t)) ein für einen nichtlinearen Übergang von einem linearen Anstiegsbereich am Anfang des Ausrückweges (x_{K}(t)) in einen weitgehend linearen Anstiegsbereich am Ende des Ausrückweges (x_{K}(t)) charakteristischer Ausrückwegpunkt (x_{S}, x_{T}) als Kennwert ermittelt wird, dass aus dem Ausrückwegpunkt (x_{S}, x_{T}) ein Endpunkt (x_{LE_neu}) des linearen Anstiegsbereiches am Anfang des Ausrückweges (x_{K}(t)) oder eine Endpunktdifferenz (Δx_{LE} = x_{LE_alt} - x_{LE_neu}) des Endpunktes (x_{LE_neu}) zu einem bislang gültigen Endpunkt (x_{LE_alt}) abgeleitet wird, und dass der bislang gültige Endpunkt (x_{LE_alt}) mit dem neuen Endpunkt (x_{LE_neu}) oder der Endpunktdifferenz (Δx_{LE}) korrigiert wird.

3. Verfahren nach Anspruch 2, **dadurch gekennzeichnet, dass** der charakteristische Ausrückwegpunkt (x_{S}) als Schnittpunkt einer Tangente an den linearen Anstiegsbereich am Anfang des Ausrückweges (x_{K}(t)) und einer Tangente an den weitgehend linearen Anstiegsbereich am Ende des Ausrückweges (x_{K}(t)) ermittelt wird.

4. Verfahren nach Anspruch 2, **dadurch gekennzeichnet, dass** der charakteristische Ausrückwegpunkt (x_{T}) als derjenige Wert des Ausrückweges (x_{K}(t)) bestimmt wird, bei dem die Ausrückgeschwindigkeit (v_{K} = *d* x_{K} / *d* t) einen vorgegebenen Geschwindigkeitsgrenzwert (v_{K_Gr}) erreicht oder überschritten hat (V_{K} ≥ V_{K}__{Gr}).

5. Verfahren nach einem der Ansprüche 1 bis 4, **dadurch gekennzeichnet, dass** das Ausrücken der Reibungskupplung mit einer konstanten Ansteuerung bzw. Betätigung des Kupplungsstellers erfolgt, die in dem linearen Anstiegsbereich am Anfang des Ausrückweges (x_{K}(t)) einer unterhalb einer im Normalbetrieb verwendeten Soll-Ausrückgeschwindigkeit v_{K_soll} liegenden Minimalausrückgeschwindigkeit v_{K_min} entspricht (v_{K} ≈ V_{K_min} < V_{K_soll}).

6. Verfahren nach einem der Ansprüche 1 bis 4, **dadurch gekennzeichnet, dass** das Ausrücken der Reibungskupplung mit einer konstanten Ansteuerung bzw. Betätigung des Kupplungsstellers erfolgt, die in dem linearen Anstiegsbereich am Anfang des Ausrückweges (x_{K}(t)) der im Normalbetrieb verwendeten Soll-Ausrückgeschwindigkeit (v_{K_soll}) entspricht (v_{K} ≈ v_{K_soll}).

7. Verfahren nach Anspruch 6, **dadurch gekennzeichnet, dass** aus dem zeitlichen Verlauf des Ausrückweges (x_{K}(t)) die Ausrückgeschwindigkeit (v_{K_ist} = Δx_{K} / Δt) des linearen Anstiegsbereiches am Anfang des Ausrückweges (x_{K}(t)) ermittelt wird, dass damit die Geschwindigkeitsdifferenz (Δv_{K}) zu der Soll-Ausrückgeschwindigkeit (v_{K_soll}) gebildet wird (Δv_{K} = v_{K_soll} - v_{K_ist}), und dass der betreffende Steuerungsparameter des Kupplungsstellers zur Erzielung der Soll-Ausrückgeschwindigkeit (v_{K_soll}) proportional zu der Geschwindigkeitsdifferenz (Δv_{K}) korrigiert wird.

8. Verfahren nach einem der Ansprüche 1 bis 7, **dadurch gekennzeichnet, dass** die erfindungsgemäße Korrektur eines Steuerungsparameters des Kupplungsstellers erstmals nach Abschluss der Endmontage des betreffenden Kraftfahrzeugs beim Fahrzeughersteller durchgeführt wird.

9. Verfahren nach einem der Ansprüche 1 bis 8, **dadurch gekennzeichnet, dass** die erfindungsgemäße Korrektur eines Steuerungsparameters des Kupplungsstellers bei jedem Neustart des betreffenden Kraftfahrzeugs durchgeführt wird.

10. Verfahren nach einem der Ansprüche 1 bis 9, **dadurch gekennzeichnet, dass** die erfindungsgemäße Korrektur eines Steuerungsparameters des Kupplungsstellers während des Fahrbetriebs in regelmäßigen Zeitintervallen jeweils während einer Fahrpause in Verbindung mit einer fahrbetriebsunabhängigen Kupplungsbetätigung und/oder während der Fahrt in Verbindung mit einer anfahr- oder schaltungsbedingten Kupplungsbetätigung durchgeführt wird.
